# EUROPÄISCHE PATENTSCHRIFT

(11) **EP 3 000 518 B1**
(45) Veröffentlichungstag und Bekanntmachung des Hinweises auf die Patenterteilung: **04.04.2018**
(21) Anmeldenummer: 15185042.7
(22) Anmeldetag: 14.09.2015
(51) Int. Cl.: B01D 35/147, B01D 29/11, B01D 29/68

(54) **WASSERFILTEREINRICHTUNG MIT RÜCKSPÜLBAREM WASSERFILTER MIT FLIESSGESCHWINDIGKEITSREDUKTION UND VERFAHREN ZUM RÜCKSPÜLEN EINES WASSERFILTERS**
WATER FILTRATION DEVICE WITH FLUSHABLE WATER FILTER WITH FLOW RATE REDUCTION AND METHOD FOR FLUSHING A WATER FILTER
DISPOSITIF DE FILTRE A EAU EQUIPE D'UN FILTRE A EAU A LAVAGE A CONTRECOURANT A VITESSE REDUITE D'ECOULEMENT ET PROCEDE DE LAVAGE A CONTRECOURANT D'UN FILTRE A EAU

(30) Priorität: 26.09.2014 DE 102014219569
(43) Veröffentlichungstag der Anmeldung: 30.03.2016
(73) Patentinhaber: Judo Wasseraufbereitung GmbH, 71364 Winnenden (DE)
(72) Erfinder: Fiess, Helmut, 71576 Burgstetten (DE); Hänisch, Bastian, 71576 Burgstetten (DE); Ghasem-Zadeh, Farid, 71522 Backnang (DE)
(74) Vertreter: Kohler Schmid Möbus Patentanwälte

(56) Entgegenhaltungen:
- DE-C2- 3 409 473
- US-A- 4 233 157
- US-A- 4 267 060
- US-A- 5 409 618

## Beschreibung

### Hintergrund der Erfindung

Die Erfindung betrifft eine Wasserfiltereinrichtung mit einem rückspülbaren Wasserfilter, mit einem Gehäuse, einem in dem Gehäuse angeordneten Siebfiltereinsatz, der das Gehäuse in eine Einlasskammer zur Aufnahme von ungefiltertem Wasser und eine Auslasskammer zur Aufnahme von Filtrat unterteilt, und einer in der Einlasskammer angeordneten Absaugvorrichtung mit einem Absaugkopf, wobei der Absaugkopf eine zum Siebfiltereinsatz gerichtete Rückspülöffnung aufweist, und wobei die Absaugvorrichtung in einen Spülwasserkanal mit einem Spülventil mündet, welches im Rückspülbetrieb geöffnet ist, so dass Filtrat als Rückspülwasser durch eine Siebfilterfläche des Siebfiltereinsatzes mit einer Fließgeschwindigkeit in die Absaugvorrichtung strömt.

Eine solche Wasserfilteranordnung ist beispielsweise aus DE 3409473 C2 und EP 1 110 589 B1 bekannt.

Bei den aus DE 3409473 C2 (oder EP 0154726 A2) und EP 1 110 589 B1 bekannten rückspülbaren Wasserfiltern wird der Siebfiltereinsatz von Zeit zu Zeit mittels einer Rückspülung gereinigt. Dazu wird ein Teil des Filtrats durch Öffnen eines Spülventils in der Wasserfilteranordnung umgeleitet. Der Filtrat-Wasserstrom durchströmt den Siebfiltereinsatz dann in umgekehrter Richtung. Schmutzpartikel werden dadurch von der Oberfläche des Siebfiltereinsatzes abgelöst und mit dem Filtrat-Wasserstrom über den Spülwasserkanal der Absaugvorrichtung in den Abfluss gespült.

Da der Systemdruck in einer Installation in der Regel durch den Wasserversorger vorgegeben ist, kann es passieren, dass an der Rückspülöffnung die Druckdifferenz zwischen dem Systemdruck und dem Atmosphärendruck bei Öffnung des Spülventils so groß wird, dass auf die Siebfilteroberfläche und dort anhaftende Schmutzpartikel starke Absaugkräfte wirken. Ein Bewegen der Absaugvorrichtung über die verschmutzte Siebfilteroberfläche wird dadurch erschwert. Im Extremfall findet ein Festsaugen der Absaugvorrichtung an der Siebfilteroberfläche statt, so dass das Reinigen der Siebfilterfläche nicht mehr fortgesetzt werden kann.

### Aufgabe der Erfindung

Es ist Aufgabe der Erfindung eine rückspülbare Wasserfilteranordnung vorzustellen, die auch bei hohen Systemdrücken so rückgespült werden kann, dass ein Festsaugen der Filteroberfläche an der Absaugvorrichtung vermieden wird.

### Kurze Beschreibung der Erfindung

Diese Aufgabe wird erfindungsgemäß dadurch gelöst dass die Wasserfiltereinrichtung Mittel umfasst zur Reduzierung der Fließgeschwindigkeit des Rückspülwassers an der Rückspülöffnung.

Durch die erfindungsgemäße Reduzierung der Fließgeschwindigkeit wird die an der Rückspülöffnung entstehende Druckdifferenz verringert, so dass ein Festsaugen des Absaugkopfes der Absaugvorrichtung an der Siebfilterfläche vermieden werden kann. Das erfindungsgemäße Prinzip kann beispielsweise bei Wasserfiltern eingesetzt werden, die nach dem sogenannten Punktrotationsprinzip arbeiten. Diese weisen in der Regel mehrere Absaugköpfe auf, deren Rückspülöffnung sich lediglich über einen kleinen Bereich der axialen Länge des Siebfiltereinsatzes erstreckt und welche die Oberfläche des Siebfiltereinsatzes Punkt für Punkt abfahren, indem die Absaugköpfe spiralförmig über die Siebfilterfläche bewegt werden. Ebenso kann das erfindungsgemäße Prinzip bei Wasserfiltern zum Einsatz kommen, die einen oder mehrere Absaugköpfe aufweisen, deren Rückspülöffnungen sich über die gesamte Höhe des Siebfiltereinsatzes erstrecken (schlitzförmige Rückspülöffnung), so dass die Absaugköpfe lediglich um die Achse des Siebfiltereinsatzes rotiert werden müssen, um die gesamte Oberfläche des Siebfiltereinsatzes zu reinigen.

### Bevorzugte Ausführungsformen der Erfindung

Vorzugsweise dient als Mittel zur Reduzierung der Fließgeschwindigkeit des Rückspülwassers eine Bypasseinrichtung mit mindestens einer Bypassöffnung, wobei die Bypasseinrichtung die Einlasskammer mit dem Inneren der Absaugvorrichtung verbindet. Über die Bypasseinrichtung wird ungefiltertes Wasser aus der Einlasskammer direkt in die Absaugvorrichtung geleitet. Dadurch wird die Fließgeschwindigkeit des Rückspülwassers an der Rückspülöffnung der Absaugvorrichtung und damit der dort auftretende Differenzdruck so weit verringert, dass ein Festsaugen der Absaugvorrichtung an der Siebfilterfläche vermieden werden kann.

Bei einer speziellen Ausführungsform ist mindestens eine Bypassöffnung im Absaugkopf angeordnet. Unfiltriertes Wasser wird auf dem Weg zur Bypassöffnung innerhalb der Einlasskammer entlang der Oberfläche des Siebfiltereinsatzes zu dem Bereich der Siebfilterfläche geleitet, der gerade mittels der Absaugvorrichtung gereinigt wird, und anschließend über die Bypassöffnung des Absaugkopfs abgesaugt. Neben einer Verringerung des Differenzdrucks wird bei dieser Ausführungsform eine Querströmung (im Wesentlichen entlang der äußeren Siebfilterfläche) bewirkt, wodurch zusätzlich erreicht wird, dass auf der Siebfilterfläche anhaftende Schmutzpartikel besser abgelöst werden.

Bei einer besonders bevorzugten Ausführungsform mündet die Bypassöffnung quer, vorzugsweise senkrecht, zur Rückspülöffnung in den Absaugkopf. Dadurch wird eine starke Querströmung bewirkt, die das Ablösen von Schmutzpartikeln von der Oberfläche des Siebfiltereinsatzes besonders fördert.

Bei einer weiteren Ausführungsform umfasst die Bypasseinrichtung ein Bypassventil mit einer Ventilöffnung, wobei mindestens eine Bypassöffnung durch die Ventilöffnung gebildet wird. Mittels des Bypassventils kann die Menge des durch die Bypasseinrichtung strömenden Wassers und somit die Reduzierung der Fließgeschwindigkeit des Rückspülwassers auf einfache Weise reguliert werden. Das Bypassventil kann beispielsweise ein federbelastetes Ventil sein. Durch Öffnen des Bypassventils wird erreicht, dass bei hohen Druckdifferenzen die Fließgeschwindigkeit des Rückspülwassers an der Rückspülöffnung begrenzt wird.

Vorzugsweise umfasst die Wasserfiltereinrichtung eine elektronische Steuervorrichtung zur Steuerung des Bypassventils.

Alternativ oder zusätzlich zu den bereits genannten Bypasseinrichtungen kann als Mittel zur Reduzierung der Fließgeschwindigkeit des Rückspülwassers eine Drosseleinrichtung in der Absaugvorrichtung angeordnet sein.

Bei einer bevorzugten Ausführungsform umfasst die Wasserfiltereinrichtung Mittel zur Bestimmung des Spülwasservolumens. Durch Ermittlung des Spülwasservolumens pro Zeiteinheit kann die Fließgeschwindigkeit des Rückspülwassers ermittelt werden.

Zur Messung der Fließgeschwindigkeit des Rückspülwassers kann die Wasserfiltereinrichtung auch einen Strömungsmesser umfassen.

Die vorliegende Erfindung betrifft auch ein Verfahren zum Rückspülen eines Wasserfilters, insbesondere eines Wasserfilters in einer oben beschriebenen Wasserfilteranordnung, mit einem in einem Gehäuse angeordneten Siebfiltereinsatz, der das Gehäuse in eine Einlasskammer zur Aufnahme von ungefiltertem Wasser und eine Auslasskammer zur Aufnahme von Filtrat unterteilt, und mit einer Absaugvorrichtung mit einem Absaugkopf, der eine Rückspülöffnung aufweist, wobei die Absaugvorrichtung in einen Spülwasserkanal mit einem Spülventil mündet, wobei das Spülventil im Rückspülbetrieb geöffnet ist, so dass Filtrat als Rückspülwasser durch eine Siebfilterfläche des Siebfiltereinsatzes mit einer Fließgeschwindigkeit in die Absaugvorrichtung strömt. Erfindungsgemäß wird die Fließgeschwindigkeit des Rückspülwassers an der Rückspülöffnung der Absaugvorrichtung während des Rückspülbetriebes reduziert, wenn die Fließgeschwindigkeit einen Grenzwert GW1 überschreitet und/oder wenn die Druckdifferenz zwischen dem Systemdruck in der Einlasskammer und dem Druck in der Absaugvorrichtung einen Grenzwert GW2 überschreitet. Für den Grenzwert GW1 sind Werte im Bereich 5 - 30 m/s, beispielsweise 15 m/s, für den Grenzwert GW2 Werte im Bereich 3 - 10 bar, beispielsweise 5 bar sinnvoll.

Vorzugsweise erfolgt die Reduzierung der Fließgeschwindigkeit des Rückspülwassers zumindest teilweise dadurch, dass unfiltriertes Wasser von der Einlasskammer über mindestens eine Bypassöffnung in die Absaugvorrichtung geleitet wird.

Bei einer bevorzugten Variante wird unfiltriertes Wasser von der Einlasskammer zum Absaugkopf geleitet und über mindestens eine im Absaugkopf angeordnete Bypassöffnung abgesaugt, wenn die Fließgeschwindigkeit den Grenzwert GW1 überschreitet.

Dabei ist es besonders vorteilhaft, wenn unfiltriertes Wasser in der Einlasskammer quer, vorzugsweise senkrecht, zur Strömungsrichtung des Rückspülwasserstroms zum Absaugkopf der Absaugvorrichtung geleitet wird. Dies erfolgt vorzugsweise über Ansaugen des unfiltrierten Wassers über die Bypassöffnungen im Absaugkopf. Das Ansaugen des unfiltrierten Wassers sollte vorzugsweise so erfolgen, dass die Strömungsrichtung des ungefilterten Wassers zumindest annähernd senkrecht zur Strömungsrichtung des Rückspülwasserstroms ist. Eine möglichst große Richtungskomponente der Strömung parallel zur verschmutzen Siebfilterfläche bewirkt, dass anhaftende Schmutzpartikel besser von der Oberfläche des Siebfiltereinsatzes gelöst werden.

Alternativ oder zusätzlich kann zumindest eine Bypassöffnung mittels eines Bypassventils freigegeben werden, wenn die Druckdifferenz zwischen dem Systemdruck in der Einlasskammer und dem Druck in der Absaugvorrichtung den Grenzwert GW2 überschreitet. Dadurch wird erreicht, dass bei hohen Druckdifferenzen die Fließgeschwindigkeit des Rückspülwassers an der Rückspülöffnung begrenzt wird. Das Bypassventil kann beispielsweise ein federbelastetes Ventil sein, dessen Feder so eingestellt ist, dass das Ventil bei Überschreitung einer bestimmten Druckdifferenz automatisch öffnet.

Es ist auch möglich, die Fließgeschwindigkeit des Rückspülwassers mittels eines Strömungsmessers zu bestimmen und das Bypassventil zu öffnen, wenn die Fließgeschwindigkeit des Rückspülwassers den Grenzwert GW1 überschreitet. Die Signale des Strömungsmessers werden dabei vorzugsweise von einer elektronischen Steuereinrichtung verarbeitet, die das Bypassventil ansteuert.

Da das Spülwasservolumen pro Zeiteinheit bei vorgegebener Filtergeometrie, insbesondere dem Querschnitt der Absaugvorrichtung, proportional zur Rückspülfließgeschwindigkeit ist, kann zur Bestimmung der Fließgeschwindigkeit des Rückspülwassers das Rückspülwasservolumen pro Zeiteinheit ermittelt werden. Die Einheit der Rückspülfließgeschwindigkeit ist m³/m²s = m/s.

Eine Reduzierung der Fließgeschwindigkeit des Rückspülwassers kann auch zumindest teilweise mittels einer Drosseleinrichtung im Spülwasserkanal erfolgen. Die Drosseleinrichtung ist vorzugsweise verstellbar, so dass bei einem hohen Systemdruck in der Einlasskammer entsprechend stärker gedrosselt werden kann, während bei geringeren Systemdrücken in der Einlasskammer die Möglichkeit besteht, weniger oder gar nicht zu drosseln.

Der Einbau einer Drosseleinrichtung ist besonders einfach und kostengünstig.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt einen detaillierten Längsschnitt durch eine erste Ausführungsform der erfindungsgemäßen Wasserfiltereinrichtung im Rückspülbetrieb mit geschlossenem Bypassventil.
- Fig. 1b: zeigt die Wasserfiltereinrichtung aus Fig. 1a im Rückspülbetrieb mit geöffnetem Bypassventil.
- Fig. 2a, 2b: zeigen Detailansichten einer Absaugvorrichtung einer weiteren Ausführungsform der erfindungsgemäßen Wasserfiltereinrichtung mit einer Bypassöffnung am Absaugkopf.
- Fig. 3: zeigt eine weitere Ausführungsform der erfindungsgemäßen Wasserfiltereinrichtung mit einer Drosseleinrichtung.

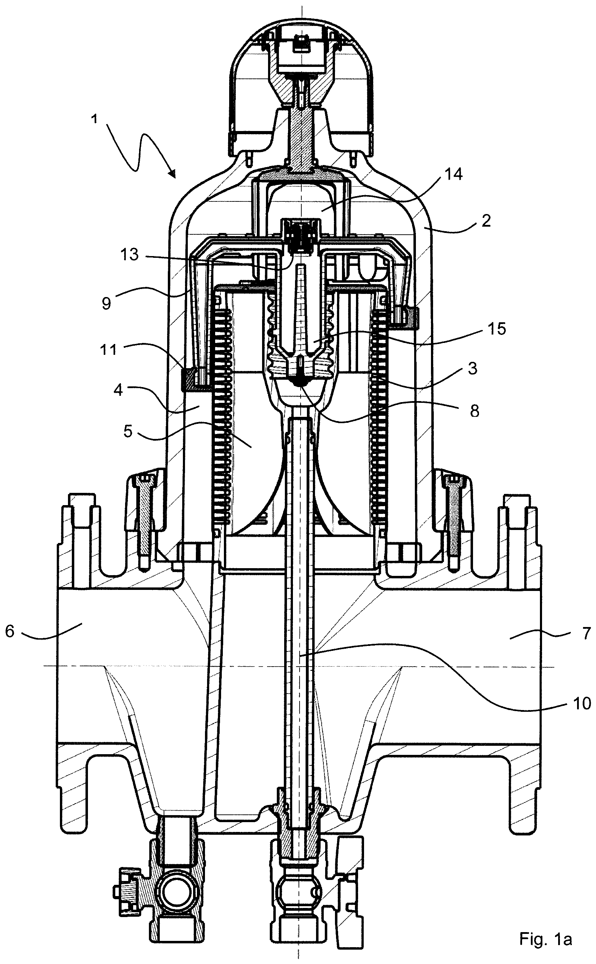

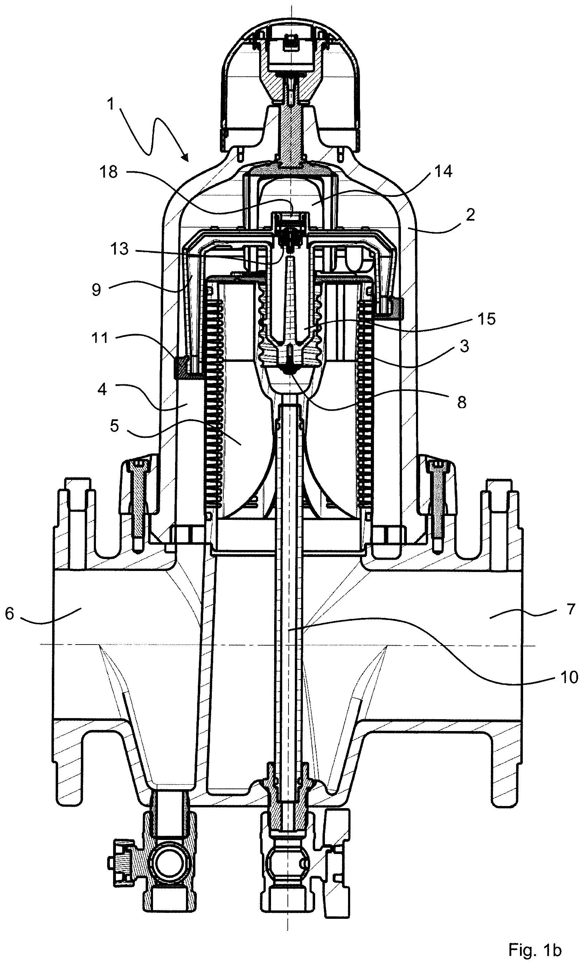

**Fig. 1a**, **1b** zeigen eine erste Ausführungsform der erfindungsgemäßen Wasserfiltereinrichtung. Die Wasserfiltereinrichtung umfasst einen Wasserfilter **1** mit einem Gehäuse **2**, in dem koaxial zum Gehäuse 2 ein zylinderförmiger Siebfiltereinsatz **3** angeordnet ist, der das Gehäuse 2 in eine Einlasskammer **4** zur Aufnahme von ungefiltertem Wasser und eine Auslasskammer **5** zur Aufnahme von Filtrat unterteilt. Das zu filtrierende Wasser wird durch einen Wassereinlass **6** in die Einlasskammer 4 geleitet und gelangt über den Siebfiltereinsatz 3 als Filtrat in die Auslasskammer 5. Von dort wird das Filtrat zu einem Wasserauslass **7** aus dem Filter 1 ausgeleitet. Zum Reinigen der Oberfläche des Siebfiltereinsatzes 3 weist die Wasserfiltereinrichtung ein Spülventil **8** auf. Durch Öffnen des Spülventils 8 strömt ein Teil des Filtrats in umgekehrter Richtung durch den Siebfiltereinsatz 3 in die Einlasskammer 4. Schmutzpartikel werden dadurch von der Oberfläche des Siebfiltereinsatzes 3 abgelöst und mit dem Wasserstrom von einer Absaugvorrichtung **9** über einen Spülwasserkanal **10** ausgeleitet. Die Absaugvorrichtung 9 weist einen Absaugkopf **11** auf, der über die Oberfläche des Siebfiltereinsatzes 3 verfahren werden kann. Im Absaugkopf 11 ist eine zur Oberfläche des Siebfiltereinsatzes 3 weisende Rückspülöffnung **12** angeordnet, über die der filtrierte Wasserstrom und die durch den Wasserstrom abgelösten Schmutzpartikel abgesaugt werden.

Zur Reduzierung der Fließgeschwindigkeit im Rückspülbetrieb ist erfindungsgemäß ein Bypassventil **13** zwischen einem Bereich **14** der Einlasskammer und einem Bereich **15** der Absaugvorrichtung 9 vorgesehen, welches in Fig. 1a im geschlossenen Zustand dargestellt ist. In diesem Fall kann kein (unfiltriertes) Wasser aus dem Bereich 14 der Einlasskammer 4 in den Bereich 15 der Absaugvorrichtung 9 strömen.

Wird im Rückspülbetrieb das Bypassventil 13 geöffnet, strömt Wasser über die Ventilöffnung **18** (Bypassöffnung) des Bypassventils 13 aus dem Bereich 14 der Einlasskammer in den Bereich 15 der Absaugvorrichtung 9, wodurch die Fließgeschwindigkeit des Rückspülwassers an der Rückspülöffnung und die Absaugwirkung abnehmen. Vorzugsweise ist das Bypassventil 13 ein federbelastetes Ventil, welches bei einer großen Druckdifferenz zwischen dem Druck in der Absaugvorrichtung 9 und dem Systemdruck öffnet und somit verhindert, dass sich der Absaugkopf 11 am Siebfiltereinsatz 3 festsaugt.

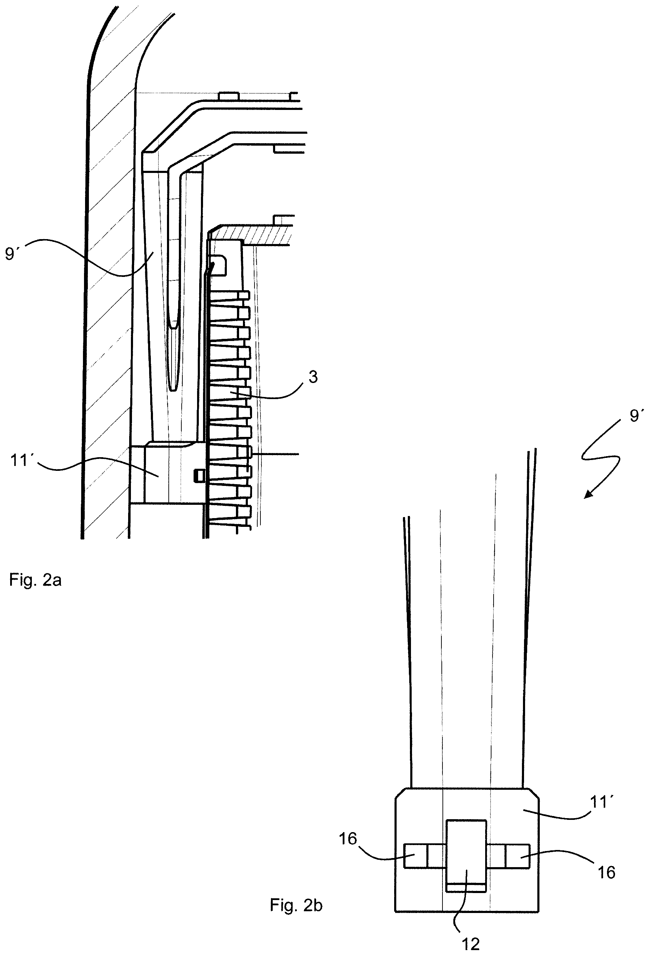

In Fig. 2a, 2b sind Detailansichten einer Absaugvorrichtung **9'** mit einem Absaugkopf **11'** gezeigt. Wie bei der in den Fig. 1a, 1b gezeigten Ausführungsform durchströmt im Rückspülbetrieb Filtrat den Siebfiltereinsatz 3 von der Reinwasserseite zur Rohwasserseite. Das mit Schmutzpartikeln angereicherte Rückspülwasser tritt durch die Rückspülöffnung 12 in die Absaugvorrichtung **9'** und wird schließlich über das Spülventil 8 ausgespült.

Zusätzlich zur Rückspülöffnung 12 befinden sich bei der in Fig. 2a, 2b gezeigten Absaugvorrichtung 9' im Absaugkopf 11' Bypassöffnungen **16**, welche quer (hier: senkrecht) zur Rückspülöffnung 12 ausgerichtet sind. Über die Bypassöffnung 16 strömt in der Einlasskammer 4 unfiltriertes Wasser parallel zur Oberfläche des Siebfiltereinsatzes 3 in die Absaugvorrichtung 9'. Es wird also ein Bypassströmung durch die Bypassöffnungen 16 zusätzlich zur Absaugströmung bewirkt. Durch diese Bypassströmung parallel zur verschmutzten Oberfläche des Siebfiltereinsatzes 3 werden dort anhaftende Schmutzpartikel abgelöst und somit der Reinigungsprozess unterstützt. Gleichzeitig nimmt durch die Bypassströmung die Fließgeschwindigkeit des Rückspülwassers an der Rückspülöffnung 12 ab.

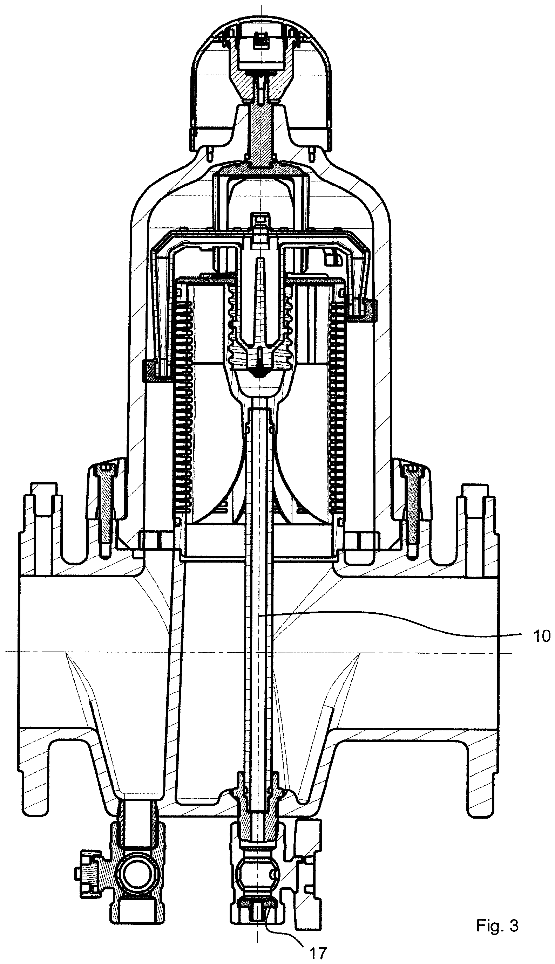

In **Fig. 3** ist eine weitere Ausführungsform der erfindungsgemäßen Wasserfiltereinrichtung gezeigt, bei der im Spülwasserkanal 10 eine Drosseleinrichtung **17** angeordnet ist, über welche die Fließgeschwindigkeit des Rückspülwassers reduziert werden kann.

Allen Ausführungsformen ist gemeinsam, dass Mittel vorgesehen sind, mit denen eine Reduzierung der Fließgeschwindigkeit des Rückspülwassers an der Rückspülöffnung des Absaugkopfes bewirkt werden kann.

### Bezugszeichenliste

- 1: Wasserfilter
- 2: Gehäuse
- 3: Siebfiltereinsatz
- 4: Einlasskammer
- 5: Auslasskammer
- 6: Wassereinlass
- 7: Wasserauslass
- 8: Spülventil
- 9, 9': Absaugvorrichtung
- 10: Spülwasserkanal
- 11, 11': Absaugkopf
- 12: Rückspülöffnung
- 13: Bypassventil
- 14: Bereich der Einlasskammer
- 15: Bereich der Absaugvorrichtung
- 16: Bypassöffnungen an der Absaugvorrichtung
- 17: Drosseleinrichtung
- 18: Ventilöffnung (Bypassöffnung)

## Patentansprüche

1. Wasserfiltereinrichtung mit einem rückspülbaren Wasserfilter (1), mit einem Gehäuse (2), einem in dem Gehäuse (2) angeordneten Siebfiltereinsatz (3), der das Gehäuse (2) in eine Einlasskammer (4) zur Aufnahme von ungefiltertem Wasser und eine Auslasskammer (5) zur Aufnahme von Filtrat unterteilt, und einer in der Einlasskammer (4) angeordneten Absaugvorrichtung (9, 9') mit einem Absaugkopf (11, 11'),
wobei der Absaugkopf (11, 11') eine zum Siebfiltereinsatz gerichtete Rückspülöffnung (12) aufweist,
wobei die Absaugvorrichtung (9, 9') in einen Spülwasserkanal (10) mit einem Spülventil (8) mündet, welches im Rückspülbetrieb geöffnet ist, so dass Filtrat als Rückspülwasser durch eine Siebfilterfläche des Siebfiltereinsatzes (3) mit einer Fließgeschwindigkeit in die Absaugvorrichtung (9, 9') strömt,
**dadurch gekennzeichnet,**
**dass** die Wasserfiltereinrichtung zur Reduzierung der Fließgeschwindigkeit des Rückspülwassers an der Rückspülöffnung (12) eine Bypasseinrichtung mit mindestens einer Bypassöffnung (16, 18) umfasst, wobei die Bypasseinrichtung die Einlasskammer (4) mit dem Inneren der Absaugvorrichtung (9, 9') verbindet, und dass die Bypasseinrichtung ein Bypassventil (13) mit einer Ventilöffnung (18) umfasst, und dass mindestens eine Bypassöffnung durch die Ventilöffnung (18) gebildet wird.

2. Wasserfiltereinrichtung nach Anspruch 1, **dadurch gekennzeichnet, dass** mindestens eine Bypassöffnung (16) im Absaugkopf (11') angeordnet ist.

3. Wasserfiltereinrichtung nach Anspruch 2, **dadurch gekennzeichnet, dass** die Bypassöffnung (16) quer zur Rückspülöffnung (12) in den Absaugkopf (11') mündet.

4. Wasserfiltereinrichtung nach Anspruch 3, **dadurch gekennzeichnet, dass** die Bypassöffnung (16) senkrecht zur Rückspülöffnung (12) in den Absaugkopf (11') mündet.

5. Wasserfiltereinrichtung nach einem der vorhergehenden Ansprüche, **dadurch gekennzeichnet, dass** die Wasserfiltereinrichtung eine elektronische Steuervorrichtung zur Steuerung des Bypassventils (13) umfasst.

6. Wasserfiltereinrichtung nach einem der vorhergehenden Ansprüche, **dadurch gekennzeichnet, dass** als Mittel zur Reduzierung der Fließgeschwindigkeit des Rückspülwassers eine Drossel (17) in der Absaugvorrichtung (9, 9') angeordnet ist.

7. Wasserfiltereinrichtung nach einem der vorhergehenden Ansprüche, **dadurch gekennzeichnet, dass** die Wasserfiltereinrichtung Mittel zur Bestimmung des Spülwasservolumens umfasst.

8. Wasserfiltereinrichtung nach einem der vorhergehenden Ansprüche, **dadurch gekennzeichnet, dass** die Wasserfiltereinrichtung ein Strömungsmesser zur Messung der Fließgeschwindigkeit des Rückspülwassers umfasst.

9. Verfahren zum Rückspülen eines Wasserfilters (1), mit einem in einem Gehäuse (2) angeordneten Siebfiltereinsatz (3), der das Gehäuse (2) in eine Einlasskammer (4) zur Aufnahme von ungefiltertem Wasser und eine Auslasskammer (5) zur Aufnahme von Filtrat unterteilt, und mit einer Absaugvorrichtung (9, 9') mit einem Absaugkopf (11, 11'), der eine Rückspülöffnung (12) aufweist, wobei die Absaugvorrichtung (9, 9') in einen Spülwasserkanal (10) mit einem Spülventil (8) mündet, wobei das Spülventil (8) im Rückspülbetrieb geöffnet ist, so dass Filtrat als Rückspülwasser durch eine Siebfilterfläche des Siebfiltereinsatzes (3) mit einer Fließgeschwindigkeit in die Absaugvorrichtung (9, 9') strömt,
**dadurch gekennzeichnet,**
**dass** die Fließgeschwindigkeit des Rückspülwassers an der Rückspülöffnung (12) der Absaugvorrichtung (9, 9') während des Rückspülbetriebes reduziert wird, wenn die Fließgeschwindigkeit einen Grenzwert GW1 überschreitet und/oder wenn die Druckdifferenz zwischen dem Systemdruck in der Einlasskammer (4) und dem Druck in der Absaugvorrichtung (9, 9') einen Grenzwert GW2 überschreitet, wobei die Reduzierung der Fließgeschwindigkeit des Rückspülwassers zumindest teilweise dadurch erfolgt, dass unfiltriertes Wasser von der Einlasskammer (4) über mindestens eine Ventilöffnung (18) eines Bypassventils (13) in die Absaugvorrichtung (9, 9') geleitet wird.

10. Verfahren nach Anspruch 9, **dadurch gekennzeichnet, dass** das Verfahren zum Rückspülen eines Wasserfilters (1) in einer Wasserfilteranordnung gemäß einem der vorhergehenden Ansprüche verwendet wird.

11. Verfahren nach Anspruch 9 oder 10, **dadurch gekennzeichnet, dass** unfiltriertes Wasser von der Einlasskammer (4) zum Absaugkopf (11') geleitet und über mindestens eine im Absaugkopf (11') angeordnete Bypassöffnung (16) abgesaugt wird, wenn die Fließgeschwindigkeit den Grenzwert GW1 überschreitet.

12. Verfahren nach Anspruch 11, **dadurch gekennzeichnet, dass** unfiltriertes Wasser in der Einlasskammer (4) quer zur Strömungsrichtung des Rückspülwasserstroms zum Absaugkopf (11') der Absaugvorrichtung (9') geleitet wird.

13. Verfahren nach Anspruch 12, **dadurch gekennzeichnet, dass** unfiltriertes Wasser in der Einlasskammer (4) senkrecht zur Strömungsrichtung des Rückspülwasserstroms zum Absaugkopf (11') der Absaugvorrichtung (9') geleitet wird.

14. Verfahren nach einem der Ansprüche 9 bis 13, **dadurch gekennzeichnet, dass** die Ventilöffnung (18) mittels des Bypassventils (13) freigegeben wird, wenn die Druckdifferenz zwischen dem Systemdruck in der Einlasskammer und dem Druck in der Absaugvorrichtung (9) den Grenzwert GW2 überschreitet.

15. Verfahren nach Anspruch 14, **dadurch gekennzeichnet, dass** die Fließgeschwindigkeit des Rückspülwassers mittels eines Strömungsmessers bestimmt wird und das Bypassventil (13) geöffnet wird, wenn die Fließgeschwindigkeit des Rückspülwassers den Grenzwert GW1 überschreitet.

16. Verfahren nach einem der Ansprüche 9 bis 15, **dadurch gekennzeichnet, dass** zur Bestimmung der Fließgeschwindigkeit des Rückspülwassers das Rückspülwasservolumen pro Zeiteinheit ermittelt wird.

17. Verfahren nach einem der Ansprüche 9 bis 16, **dadurch gekennzeichnet, dass** die Reduzierung der Fließgeschwindigkeit des Rückspülwassers zumindest teilweise mittels einer Drosseleinrichtung (17) im Spülwasserkanal (10) erfolgt.

## Claims

1. Water filtration device with a backflushable water filter (1), a housing (2), a mesh filter insert (3) which is arranged in the housing (2) and divides the housing (2) into an inlet chamber (4) for receiving unfiltered water, and an outlet chamber (5) for receiving filtrate, and a suction device (9, 9') which is arranged in the inlet chamber (4) and comprises a suction head (11, 11'),
wherein the suction head (11, 11') comprises a backflushing opening (12) oriented towards the mesh filter insert,
wherein the suction device (9, 9') opens into a flushing water channel (10) with a flush valve (8) which is open during backflushing operation such that filtrate flows as backflushing water with a flow rate through a mesh filter surface of the mesh filter insert (3) into the suction device (9, 9'),
**characterized in that**
the water filtration device comprises a bypass device at the backflushing opening (12) with at least one bypass opening (16, 18) for reducing the flow rate of the backflushing water, wherein the bypass device connects the inlet chamber (4) to the inside of the suction device (9, 9'), and
that the bypass device comprises a bypass valve (13) with a valve opening (18) and that at least one bypass opening is formed by the valve opening (18).

2. Water filtration device according to claim 1, **characterized in that** at least one bypass opening (16) is arranged in the suction head (11').

3. Water filtration device according to claim 2, **characterized in that** the bypass opening (16) opens into the suction head (11') transversely to the backflushing opening (12).

4. Water filtration device according to claim 3, **characterized in that** the bypass opening (16) opens into the suction head (11') perpendicularly to the backflushing opening (12).

5. Water filtration device according to any one of the preceding claims, **characterized in that** the water filtration device comprises an electronic control device for controlling the bypass valve (13).

6. Water filtration device according to any one of the preceding claims, **characterized in that** a throttle (17) is arranged in the suction device (9, 9') as means for reducing the flow rate of the backflushing water.

7. Water filtration device according to any one of the preceding claims, **characterized in that** the water filtration device comprises means for determining the flushing water volume.

8. Water filtration device according to any one of the preceding claims, **characterized in that** the water filtration device comprises a flow meter for measuring the flow rate of the backflushing water.

9. Method of backflushing a water filter (1) with a mesh filter insert (3) which is arranged in a housing (2) and divides the housing (2) into an inlet chamber (4) for receiving unfiltered water, and an outlet chamber (5) for receiving filtrate, and a suction device (9, 9') with a suction head (11, 11') which comprises a backflushing opening (12), wherein the suction device (9, 9') opens into a flushing water channel (10) with a flush valve (8), wherein the flush valve (8) is open during backflushing operation such that filtrate flows as backflushing water with a flow rate through a mesh filter surface of the mesh filter insert (3) into the suction device (9, 9'),
**characterized in that** the flow rate of the backflushing water at the backflushing opening (12) of the suction device (9, 9') is reduced during backflushing operation if the flow rate exceeds a limit value GW1 and/or if the pressure difference between the system pressure in the inlet chamber (4) and the pressure in the suction device (9, 9') exceeds a limit value GW2, wherein the flow rate of the backflushing water is reduced at least partially **in that** unfiltered water is guided from the inlet chamber (4) via at least one valve opening (18) of a bypass valve (13) into the suction device (9, 9').

10. Method according to claim 9, **characterized in that** the method for backflushing a water filter (1) is used in a water filtration device in accordance with one of the preceding claims.

11. Method according to claim 9 or 10, **characterized in that** unfiltered water is guided from the inlet chamber (4) to the suction head (11') and is sucked off via at least one bypass opening (16) arranged in the suction head (11') if the flow rate exceeds the limit value GW1.

12. Method according to claim 11, **characterized in that** unfiltered water in the inlet chamber (4) is guided transversely to the flow direction of the backflushing water flow to the suction head (11') of the suction device (9').

13. Method according to claim 12, **characterized in that** unfiltered water in the inlet chamber (4) is guided perpendicularly to the flow direction of the backflushing water flow to the suction head (11') of the suction device (9').

14. Method according to any one of the claims 9 to 13, **characterized in that** the valve opening (18) is opened by means of the bypass valve (13) if the pressure difference between the system pressure in the inlet chamber and the pressure in the suction device (9) exceeds the limit value GW2.

15. Method according to claim 14, **characterized in that** the flow rate of the backflushing water is determined by means of a flow meter and the bypass valve (13) is opened if the flow rate of the backflushing water exceeds the limit value GW1.

16. Method according to any one of the clams 9 to 15, **characterized in that** for determining the flow rate of the backflushing water, the backflushing water volume per time unit is determined.

17. Method according to any one of the claims 9 to 16, **characterized in that** the flow rate of the backflushing water is reduced at least partially by means of a throttle device (17) in the flushing water channel (10).

## Revendications

1. Appareil de filtration d'eau comprenant un filtre à eau (1) apte au rinçage à contre-courant, un boîtier (2), une garniture filtrante intégrée (3) à tamis, logée dans ledit boîtier (2) et subdivisant ledit boîtier (2) en une chambre d'admission (4) dévolue à la réception d'eau non filtrée et en une chambre de sortie (5) dévolue à la réception de filtrat, et un dispositif d'aspiration (9, 9') placé dans ladite chambre d'admission (4) et muni d'une tête d'aspiration (11, 11'),
ladite tête d'aspiration (11, 11') comportant un orifice (12) de rinçage à contre-courant, dirigé vers ladite garniture filtrante intégrée à tamis,
ledit dispositif d'aspiration (9, 9') débouchant dans un canal (10) à eau de rinçage par une soupape de rinçage (8) qui est ouverte, en mode rinçage à contre-courant, de façon telle que du filtrat afflue dans ledit dispositif d'aspiration (9, 9') en tant qu'eau de rinçage à contre-courant, avec une vitesse d'écoulement, en traversant une surface de filtration-tamisage de ladite garniture filtrante intégrée (3) à tamis,
**caractérisé par le fait**
**que** ledit appareil de filtration d'eau inclut un dispositif de dérivation pourvu d'au moins un orifice de dérivation (16, 18), au niveau de l'orifice (12) de rinçage à contre-courant, en vue de diminuer la vitesse d'écoulement de l'eau de rinçage à contre-courant, lequel dispositif de dérivation relie la chambre d'admission (4) à l'espace interne du dispositif d'aspiration (9, 9') ; et
par le fait que ledit dispositif de dérivation comporte une soupape de dérivation (13) dotée d'un orifice de distribution (18), au moins un orifice de dérivation étant formé par ledit orifice de distribution (18).

2. Appareil de filtration d'eau selon la revendication 1, **caractérisé par le fait qu'**au moins un orifice de dérivation (16) est situé dans la tête d'aspiration (11').

3. Appareil de filtration d'eau selon la revendication 2, **caractérisé par le fait que** l'orifice de dérivation (16) débouche, dans la tête d'aspiration (11'), transversalement par rapport à l'orifice (12) de rinçage à contre-courant.

4. Appareil de filtration d'eau selon la revendication 3, **caractérisé par le fait que** l'orifice de dérivation (16) débouche, dans la tête d'aspiration (11'), perpendiculairement à l'orifice (12) de rinçage à contre-courant.

5. Appareil de filtration d'eau selon l'une des revendications précédentes, **caractérisé par le fait que** ledit appareil de filtration d'eau inclut un dispositif de commande électronique dévolu au pilotage de la soupape de dérivation (13).

6. Appareil de filtration d'eau selon l'une des revendications précédentes, **caractérisé par le fait qu'**un étranglement (17) est situé dans le dispositif d'aspiration (9, 9'), en tant que moyen affecté à la diminution de la vitesse d'écoulement de l'eau de rinçage à contre-courant.

7. Appareil de filtration d'eau selon l'une des revendications précédentes, **caractérisé par le fait que** ledit appareil de filtration d'eau inclut des moyens de détermination du volume d'eau de rinçage.

8. Appareil de filtration d'eau selon l'une des revendications précédentes, **caractérisé par le fait que** ledit appareil de filtration d'eau inclut un débitmètre dévolu à la mesure de la vitesse d'écoulement de l'eau de rinçage à contre-courant.

9. Procédé de rinçage à contre-courant d'un filtre à eau (1) comprenant une garniture filtrante intégrée (3) à tamis, logée dans un boîtier (2) et subdivisant ledit boîtier (2) en une chambre d'admission (4) dévolue à la réception d'eau non filtrée et en une chambre de sortie (5) dévolue à la réception de filtrat, et un dispositif d'aspiration (9, 9') muni d'une tête d'aspiration (11, 11') comportant un orifice (12) de rinçage à contre-courant, ledit dispositif d'aspiration (9, 9') débouchant dans un canal (10) à eau de rinçage par une soupape de rinçage (8), laquelle soupape de rinçage (8) est ouverte, en mode rinçage à contre-courant, de façon telle que du filtrat afflue dans ledit dispositif d'aspiration (9, 9') en tant qu'eau de rinçage à contre-courant, avec une vitesse d'écoulement, en traversant une surface de filtration-tamisage de ladite garniture filtrante intégrée (3) à tamis,
**caractérisé par le fait**
**que** la vitesse d'écoulement de l'eau de rinçage à contre-courant est diminuée au niveau de l'orifice (12) de rinçage à contre-courant du dispositif d'aspiration (9, 9'), durant le mode rinçage à contre-courant, lorsque ladite vitesse d'écoulement excède une valeur limite GW1 et/ou lorsque la différence de pression, entre la pression de système régnant dans la chambre d'admission (4) et la pression régnant dans ledit dispositif d'aspiration (9, 9'), excède une valeur limite GW2, sachant que ladite diminution de la vitesse d'écoulement de l'eau de rinçage à contre-courant s'opère, au moins en partie, de telle manière que de l'eau non filtrée soit dirigée vers ledit dispositif d'aspiration (9, 9'), à partir de ladite chambre d'admission (4), par l'intermédiaire d'au moins un orifice de distribution (18) d'une soupape de dérivation (13).

10. Procédé selon la revendication 9, **caractérisé par le fait que** ledit procédé est mis en oeuvre pour le rinçage, à contre-courant, d'un filtre à eau (1) dans un appareil de filtration d'eau conforme à l'une des revendications précédentes.

11. Procédé selon la revendication 9 ou 10, **caractérisé par le fait que** de l'eau non filtrée est dirigée vers la tête d'aspiration (11') à partir de la chambre d'admission (4) et est évacuée par aspiration, par l'intermédiaire d'au moins un orifice de dérivation (16) situé dans ladite tête d'aspiration (11'), lorsque la vitesse d'écoulement excède la valeur limite GW1.

12. Procédé selon la revendication 11, **caractérisé par le fait que** de l'eau non filtrée renfermée par la chambre d'admission (4) est dirigée, vers la tête d'aspiration (11') du dispositif d'aspiration (9'), transversalement par rapport à la direction d'écoulement du flux d'eau de rinçage à contre-courant.

13. Procédé selon la revendication 12, **caractérisé par le fait que** de l'eau non filtrée renfermée par la chambre d'admission (4) est dirigée, vers la tête d'aspiration (11') du dispositif d'aspiration (9'), perpendiculairement à la direction d'écoulement du flux d'eau de rinçage à contre-courant.

14. Procédé selon l'une des revendications 9 à 13, **caractérisé par le fait que** l'orifice de distribution (18) est ouvert à la circulation, au moyen de la soupape de dérivation (13), lorsque la différence de pression, entre la pression de système régnant dans la chambre d'admission et la pression régnant dans le dispositif d'aspiration (9), excède la valeur limite GW2.

15. Procédé selon la revendication 14, **caractérisé par le fait que** la vitesse d'écoulement de l'eau de rinçage à contre-courant est déterminée au moyen d'un débitmètre, et la soupape de dérivation (13) est ouverte lorsque ladite vitesse d'écoulement de l'eau de rinçage à contre-courant excède la valeur limite GW1.

16. Procédé selon l'une des revendications 9 à 15, **caractérisé par le fait que** le volume d'eau de rinçage à contre-courant, par unité de temps, est spécifié en vue de déterminer la vitesse d'écoulement de ladite eau de rinçage à contre-courant.

17. Procédé selon l'une des revendications 9 à 16, **caractérisé par le fait que** la diminution de la vitesse d'écoulement de l'eau de rinçage à contre-courant s'opère, au moins en partie, au moyen d'un dispositif d'étranglement (17) intégré dans le canal (10) à eau de rinçage.
